# EUROPEAN PATENT SPECIFICATION

(11) **EP 2 187 182 B1**
(45) Date of publication and mention of the grant of the patent: **05.08.2015**
(21) Application number: 08019732.0
(22) Date of filing: 12.11.2008
(51) Int. Cl.: G01F 1/698, G01F 15/12, G01F 25/00

(54) **Method for operating a flow sensor being repetitively subjected to a thermal and/or chemical cleaning treatment, and flow measuring device**
Verfahren zum Betrieb eines Durchflusssensors, der wiederholt einem thermischen und/oder chemischen Reinigungsprozess ausgesetzt ist, und Durchflussmessgerät
Procédé de fonctionnement d'un capteur de flux qui est répétitivement sujet à des traitements de nettoyage thermiques et/ou chimiques, et appareil de mesure de débit

(43) Date of publication of application: 19.05.2010
(73) Proprietor: Sensirion AG, 8712 Stäfa (CH)
(72) Inventor: Mayer, Felix, 8712 Stäfa (CH); Hornung, Mark, 8708 Männedorf (CH); Gerner, Pascal, 8006 Zürich (CH)
(74) Representative: Sutter, Kurt

(56) References cited:
- WO-A-2007/048573
- CA-A1- 2 073 688
- JP-A- 63 184 018
- US-A- 4 579 098

## Description

### Technical Field

The invention relates to a method for operating a flow sensor, wherein said flow sensor is repetitively subjected to thermal and/or chemical treatment for sterilization and/or cleaning. The invention also relates to a device for measuring flows adapted to carry out this method.

### Background Art

In some applications, flow sensors for gases or liquids have to be subjected to thermal and/or chemical treatments at regular or irregular intervals, in particular for sterilization and/or cleaning. This is particularly true for flow sensors used in medical applications.

During such thermal and/or chemical treatment, the flow sensor is advantageously subjected to temperatures exceeding 100 °C, e.g. in order to destroy germs, and/or it is subjected to sterilizing agents.

Treatments of this type can affect the reliability of the sensor. This is in particular true for sensors integrated on semiconductors, such as e.g. described in DE 10129300 or EP 1840535, where the increased temperature or aggressive chemicals may e.g. affect the properties of the integrated electronic components. Hence, such sensors are often disposed after a single use, which leads to high costs. Alternatively, more rugged, but typically less accurate, types of sensors better suited for thermal and/or chemical sterilization treatment have to be employed.

US 4,579,098 A discloses a method of and a device for controlling a burn-off function of a measuring resistor, particularly a heated wire or heated film in an air flow sensor of an internal combustion engine. The burn-off operation for fast cleaning the measuring resistor is normally made either periodically or in response to preset operational conditions of the engine. Here, the burn-off function is interrupted when detrimental operational condition of the engine depending on the rotary speed has occurred.

In JP 63 184018 A, in a combustion engine a highly accurate detection is performed by an air flow sensor without deteriorating a hot wire by applying a high voltage current according to a calculated value based on the detection of an operation state. An adhesion substance is burned off the hot wire.

In CA 2 073 688 A1, an apparatus is disclosed comprising two sensors of the thermal type made of materials resisting without any alteration to a temperature of 650 DEG C. Probes are controlled by a microprocessor to come periodically and momentarily in contact with said sensors in order to calculate the thermal time constant of said sensors presenting a deposition layer of environmental pollutants. The microprocessor compares the value of said time constant with an order value that commands the closure of a shunt switch of a resistance which, when short-circuited, determines a reinforced heating of the sensors to bring them to a temperature of incineration of organic materials originating from the pollution of the ambient medium and deposited on said sensors. Thus, the sensors are maintained in the cleanliness conditions of their surface, thereby providing for the accuracy of information supplied by said sensors outside cleaning periods.

In WO 2007/048573 A, a method for the self-cleaning of a flow sensor element is disclosed in which a temperature-measuring element and a heating element are arranged on a carrier element, wherein the temperature measuring element has a platinum thin-film resistor on a ceramic base for measuring the temperature and is heated using an additional platinum thin-film resistor.

### Disclosure of the Invention

The problem to be solved by the present invention is therefore to provide a solution allowing to use thermal and/or chemical treatment of the flow sensors that allows accurate measurements while keeping costs low.

This problem is solved by the method and device of the independent claims. Accordingly, the flow sensor comprises a memory containing a number indicative of a count of treatments the flow sensor has been subjected to. This number is updated after each treatment.

This allows to increase measurement quality or reliability e.g. by issuing a warning when the count of treatments exceeds a given limit, and/or the stored number can e.g. be used for quality assurance and failure analysis.

The invention is particularly well suited for flow sensors having a semiconductor substrate with a heater and at least one temperature sensor integrated thereon. In this case, the memory can also be integrated on the semiconductor substrate, which allows to provide a low cost solution.

In an advantageous application, the flow sensor is connected to a control unit when it has to measure a flow. During treatment, the flow sensor is disconnected from the control unit such that there is no need to subject the control unit to the treatment, but merely the flow sensor alone.

The control unit can cause the number in the memory of the flow sensor to be updated after each treatment, either in response to a manual command or automatically.

### Brief Description of the Drawings

The invention will be better understood and objects other than those set forth above will become apparent from the following detailed description thereof. Such description makes reference to the annexed drawings, wherein:
Fig. 1 is a block diagram of a device for measuring the flow of a fluid and
Fig. 2 is a view of the components of the device.

### Modes for Carrying Out the Invention

The flow sensor device:

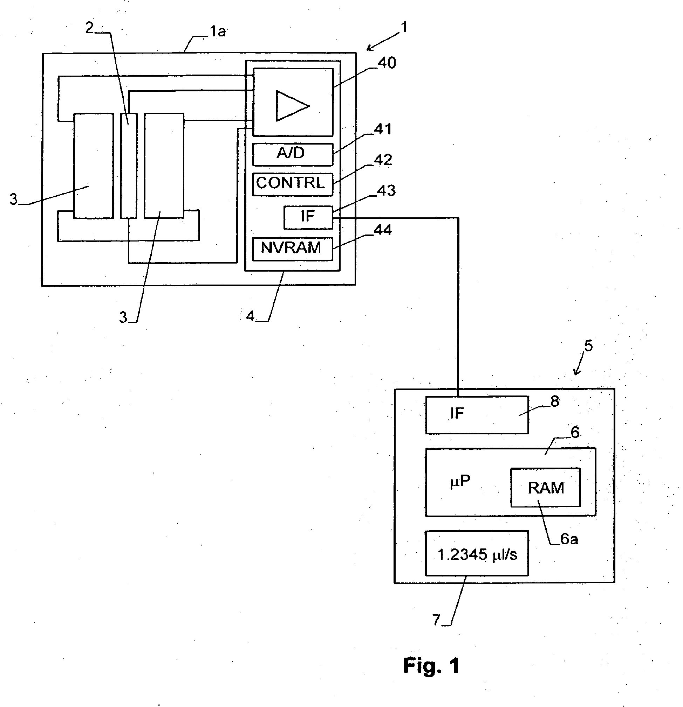

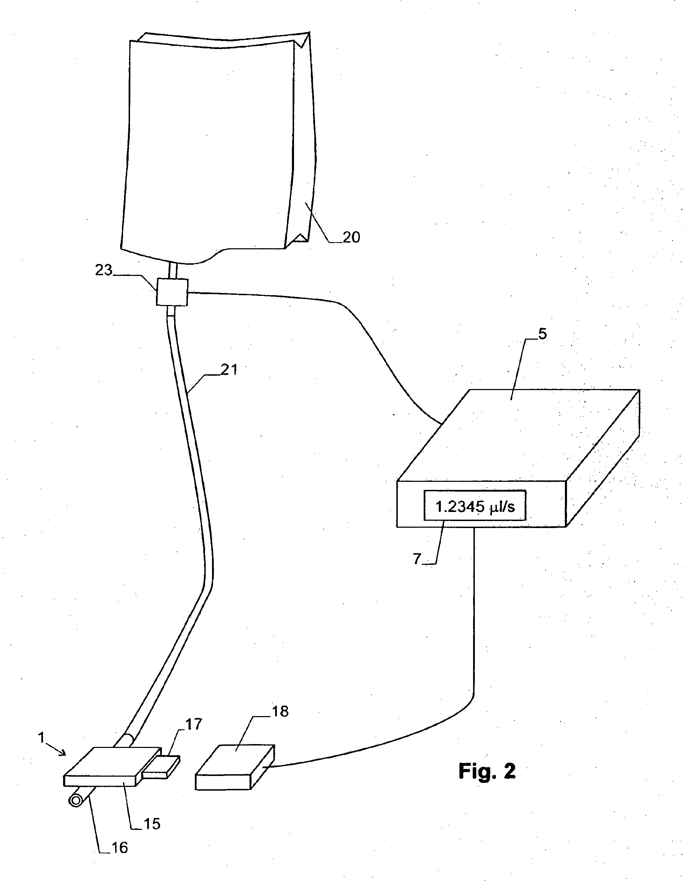

Figs. 1 and 2 show some of the components of an embodiment of a device for measuring the flow of a fluid.

The device comprises a flow sensor 1 integrated on a flow sensor chip 1a, in particular a semiconductor substrate. Flow sensor 1 is advantageously a thermal flow sensor comprising a heater 2 and at least one temperature sensor 3. A flow over the heater 2 changes the temperature and temperature distribution in the region around the heater, which, in turn, can be measured by the temperature sensor(s) 3 in order to generate a raw signal.

To keep costs low, heater 2 and temperature sensor(s) can be integrated components on a MEMS device.

An advantageous embodiment of such a device is described in DE 10129300. As shown in Fig. 10 of that document, it comprises a heater and two temperature sensors arranged on a substrate, advantageously a semiconductor substrate. The temperature sensors are thermopiles and are interconnected such that they measure a raw signal corresponding to the temperature difference before and after the heater.

Flow sensor 1 comprises electronic circuitry 4 integrated on sensor chip 1a, which includes:
- Analogue circuitry 40 for the analogue processing (such as amplification and filtering) of the raw signal from the temperature sensors 3 as well as for driving heater 2.
- An A/D converter 41 for converting the signal processed by the analogue circuitry 40.
- A controller 42 for controlling operation of the flow sensor and for performing digital signal conditioning, such as linearization.
- A digital interface 43 for data exchange with an external control unit (see below).
- A digital memory 44 at least part of which non-volatile and rewritable. Interface 43 provides read/write access to at least part of memory 44.

When in use, a data connection between interface 43 of flow sensor 1 and an external control unit 5 is established. This data connection is capable of transferring digital data between flow sensor 1 and control unit 5, and it can e.g. be a direct electrical connection between flow sensor 1 and control unit 5 or a wireless connection. Advantageously, the data connection is bidirectional, allowing control unit 5 to also send data, such as commands, to sensor 1. Control unit 5 e.g. comprises a microprocessor system 6 with a memory 6a, a display 7 and an interface 8. Display 7 can, for example, be used to display the actual flow, e.g. in volumes/second or weight/second, as well as status information and messages. Interface 8 is used for interfacing with flow sensor 1.

Flow sensor 1 can also comprise further sensor elements, such as a temperature sensor for measuring the temperature of the fluid and/or of the substrate. Such additional sensors can be used to obtain more accurate flow results, as it is known to the skilled person.

As can be seen from Fig. 2, flow sensor 1 is e.g. arranged in a housing 15, which may e.g. be directly cast around the substrate of the MEMS device mentioned above, or it may be a larger housing surrounding a protective housing cast about the MEMS device. Housing 15 can be connected to or can form a duct 16, in which the flow of the fluid is to be measured. Flow sensor 1 further comprises a connector 17 for detachably connecting it to control unit 5, e.g. by means of mating plug 18. Alternatively, a wireless interface between flow sensor 1 and control unit 5 can be provided.

The device of Fig. 2 further shows a fluid container 20, which e.g. contains a medical fluid. A tube 21 connects fluid container 20 and flow sensor 1. In Fig. 2, fluid container 20 is shown to be a bag, but it can e.g. also be a local gas bottle or a central gas reservoir.

The system further comprises a fluid pump or fluid valve, as schematically shown under reference number 23, used for conveying the fluid or controlling its flow in tube 21. Fluid pump or valve 23 can be controlled by control unit 5.

As it will be clear to the skilled person, fluid pump or valve 23 can be mounted at any suitable point along the fluid duct. It may be directly connected to container 20 and/or to flow sensor 1, or flow sensor 1 can be inserted into a suitable sensor section of fluid pump or valve 23. Also, fluid pump or valve 23 can be located in the same housing as control unit 5, or it can, as shown in Fig. 2, have its own housing. Similarly, flow sensor 1 can be (releasably) mounted to control unit 5, or the connection can be established through a cable as shown in Fig. 2.

### Operation:

To measure a flow by means of flow sensor 1, sensor 1 is connected to control unit 5. Control unit 5 issues commands to flow sensor 1 and reads flow data through interfaces 8 and 43.

For sterilizing and/or cleaning flow sensor 1, flow sensor 1 is disconnected from control unit 5 and is placed, without control unit 5, in a sterilizing/cleaning apparatus, such as an autoclave, for thermal treatment.

Typically, during thermal treatment flow sensor 1 is subjected to temperatures exceeding 100 °C, e.g. 120 °C for a period of e.g. several minutes or more.

After thermal treatment, flow sensor 1 is reconnected to control unit 5 for performing further flow measurements.

Alternatively to a thermal treatment, and/or in addition thereto, the sensor may also be subjected to a chemical treatment, in particular for sterilization purposes.

Before running a flow measurement, control unit 5 performs the following steps (not necessarily in the given order):

### Step 1: Preliminary tests

Control unit 5 checks if it can operate with the connected flow sensor and if certain messages are to be shown. This can e.g. comprise at least one of the following checks:
- Control unit 5 reads a type indicator that is stored in memory 44 of flow sensor 1. The type indicator indicates what properties and capabilities the flow sensor has. For example, the type indicator can be a part number attributed to the flow sensor by the manufacturer. It can e.g. be indicative of the commands and protocols the flow sensor is able to process, the flow range it is adapted for, its release version, etc. Based on the type indicator, control unit 5 can determine if it is able to communicate properly with a given flow sensor and if the flow sensor is able to carry out the required measurements. If not, an alert is issued.
- Control unit 5 reads a number from memory 44 indicative of the counts of treatments the sensor has undergone. This number can e.g. be equal to the count of treatments, or it may e.g. be equal to the number of treatments that the sensor can still be subjected to before it becomes unreliable. This number is e.g. used to issue an alert if the sensor has already undergone a too large number of treatments, or it may e.g. be merely recorded for quality assurance and failure analysis purposes.
- Control unit 5 reads an "expiry date" of flow sensor 1 from memory 1. This expiry date has been written into memory 44 e.g. by the manufacturer of the sensor and indicates a maximum age at which the flow sensor is guaranteed to operate correctly. Control unit 5 compares the expiry date with the current date (today) and issues an alert or rejects the flow sensor if the current date is after the expiry date.
- Control unit 5 reads a "notification" stored in a notification storage of memory 44. This allows the manufacturer or distributor of the flow sensor to communicate with the end users. Depending on the notification, control unit 5 can e.g. initiate one of the following:
   a) The notification can e.g. be defined to inform the user of control unit 5 of the availability of new software. For example, the notification can e.g. comprise the version number of the latest release of the software running in control unit 5 at the time the flow sensor was manufactured. If control unit 5 finds a notification indicating a version number greater than the version number of the software it is presently using, it can e.g. display a message indicative of a need to carry out a software update for the control unit 5. For example, the following message can be displayed on display 7: "Please update the software of this control unit to the latest version".
   b) The notification can e.g. be contain a message that the manufacturer of flow sensor 1 wants to display on display 7 of control unit 5, such as a security warning (e.g. "warning, this sensor is not graded for medical applications") or an information message (e.g. "to order new flow sensors, please see www.flowsensors.biz") or a news item ("New support phone number as from 01/01/09: 12345678"). Any such notification can include a conditional code, which specifies the criteria for displaying the message. For example, the notification may indicate a date range during which it is to be displayed or the type of control unit it should be displayed on.

### Step 2: Checking if a sensor test is required

Control unit 5 checks if a sensor test procedure has to be started. If yes, it continues with step 3 below.

The need for a sensor test can e.g. be derived based on one or both of the following criteria:
- Control unit 5 checks if the flow sensor connected to it has been replaced since the last flow measurements. For this purpose, a unique serial number is stored in memory 44 of each flow sensor. Control unit 5 reads out this serial number and checks if it is equal to the serial number of the flow sensor used at a given port last time. If not, i.e. if the serial number has changed, this is a clear indicator that flow sensor 1 has been replaced and a sensor test procedure is started.
- The user can indicate if a sensor test procedure is required, e.g. by manually operating an input control of control unit 5.

### Step 3: Increasing the treatment counter

If, during step 2, it has been determined that a test procedure is to be started, it is assumed that the sensor has been subjected to a treatment. In that case, control unit 5 causes the number in memory 44 to be updated. This can either be carried out (a) by issuing a command to flow sensor 1, which then updates the number by itself, or, advantageously, (b) by the control unit 5 reading out the number from memory 44, updating it, and writing it back to memory 44. Alternative (b) has the advantage that it allows to keep the circuitry in flow sensor 1 simpler.

The exact nature of how the number is "updated" depends on what the number stands for. If the number e.g. stands for the count of treatments the flow sensor has undergone, the number is updated by incrementing it by 1. If the number e.g. stands for the number of treatments that the sensor can still be subjected to before it becomes unreliable, the number is decremented by 1 if it is larger or equal to zero.

After updating the number, it should be checked using the criteria given in step 1 above.

In addition to updating the number, a time stamp indicative of the time (at least the date) of the update can be stored within memory 44. The updated time stamp can replace an existing time stamp of an earlier update, or it can be added to a list of time stamps stored as a log in memory 44.

### Step 4: Sensor test procedure

If, during step 2, it has been determined that a test procedure is to be started, at least one of the following sub-steps is initiated by control unit 5:
- Flow sensor 1 is tested for integrity, i.e. for proper functioning. This can e.g. involve a self-test comprising one or more of the tests described in EP 1965179.
- Operational parameters for flow sensor 1 are determined, such as an offset of the raw signal during zero flow, an amplification of an amplifier in analogue circuitry 40, a resistivity of heater 2, etc. These parameters are e.g. used for an at least partial recalibration of the sensor and/or they are stored in memory 44, e.g. for later reference during signal conditioning. If it is found that a parameter has changed by a large degree and/or falls outside an allowable range, a warning may be issued and/or the flow sensor can be rejected by control unit 5. In a particularly advantageous embodiment, a log of the operating parameters measured in several sensor test procedures is stored in memory 44, thereby describing the "history" of the sensor. This can e.g. be advantageous for quality control purposes or diagnosis, for example when trying to find out why a given flow sensor has failed. The log can also comprise the time stamps mentioned above.

### Step 5: Flow measurements

During regular operation, control unit 5 operates flow sensor 1 to carry out flow measurements as mentioned above.

### Notes:

As can be seen from the above, by storing appropriate information in the memory of flow sensor 1 the reliability of the system can be improved, a better quality control can be achieved, and new communication channels between manufacturer/distributor and end users become available.

The invention is particularly well suited for being used with disposable sensors, which are disposed after a certain time or a certain number of thermal processing cycles, but it can also be applied in other systems.

A primary field of application is in the area of drug delivery or in the field of measuring flow of body fluids through medical equipment.

## Claims

1. A method for operating an flow sensor (1), wherein said flow sensor (1) comprises a digital memory (44), wherein said flow sensor (1) is repetitively subjected to thermal and/or chemical treatment for sterilization and/or cleaning, **characterized in that** a number indicative of a count of treatments that said flow sensor (1) has been subjected to is stored in non-volatile manner in said memory (44) and said number is updated after each treatment of said flow sensor (1).

2. The method of claim 1 wherein said flow sensor (1) comprises a semiconductor substrate (1a) and wherein said memory (44) is integrated in said flow sensor (1).

3. The method of any of the claims 1 or 2 wherein said flow sensor (1) comprises a heater (2) and at least one temperature sensor (3), and in particular wherein said heater (2) and said at least one temperature sensor (3) are integrated on a semiconductor substrate (1a) of said flow sensor (1).

4. The method of any of the preceding claims wherein, for measuring a flow, said flow sensor (1) is connected to a control unit (5) and, for said treatment, said flow sensor (1) is disconnected from said control unit (5) and thermally treated without said control unit (5).

5. The method of claim 4, wherein, after a treatment, said control unit (5) causes said number to be updated.

6. The method of any of the claims 4 or 5, wherein a unique serial number of said flow sensor (1) is stored in said memory (44) and wherein, when said control unit (5) detects that the serial number of an attached flow sensor (1) changes, it initiates a sensor test procedure and/or causes said number to be updated.

7. The method of any of the claims 4 to 6 wherein said memory (44) comprises a notification stored in a notification storage of said memory (44), and wherein said notification is read by said control unit (5) and, wherein a message is issued by said control unit (5) depending on said notification, and in particular wherein said message is indicative of a need to carry out a software update for said control unit (5).

8. The method of any of the claims 4 to 7 wherein said memory (44) comprises a notification stored in said notification storage, and wherein said notification comprises a message, which is displayed by said control unit (5).

9. The method of any of the claims 4 to 8 wherein, for updating said number, said number is read from said memory (44) by said control unit (5), updated in said control unit (5), and written back by said control unit (5) into said memory (44).

10. The method of any of the preceding claims wherein said flow sensor (1) is repetitively subjected to sensor test procedures, wherein in each sensor test procedure, operating parameters of said flow sensor (1) are measured, and, in particular, wherein said operating parameters are stored in said memory (44).

11. The method of claim 10 wherein a log of operating parameters measured in several sensor test procedures is stored in said memory (44).

12. The method of any of the preceding claims wherein during said treatment said flow sensor (1) is subjected to a temperature exceeding 100 °C.

13. The method of any of the preceding claims wherein said memory (44) comprises an expiry date of said flow sensor (1).

14. The method of any of the claims 4 to 9 and of claim 13 comprising the steps of
reading out said expiry date by said control unit (5)
comparing said expiry date with a current date by said control unit (5) and
issuing an alert and/or rejecting the flow sensor (1) if the current date is after the expiry date.

15. The method of any of the preceding claims wherein said flow sensor (1) is repetitively subjected to sensor test procedures, wherein, during said sensor test procedures, said flow sensor (1) is tested for integrity.

16. The method of any of the preceding claims further comprising the step of storing a time stamp in said memory (44) when updating said number.

17. A device for measuring flows comprising a control unit (5) and a flow sensor (1), wherein said flow sensor (1) is detachably connectable to said control unit (5), **characterized in that** said flow sensor (1) comprises a non-volatile memory (44) for receiving a number indicative of a count of thermal and/or chemical treatments the flow sensor (1) has been subjected to and wherein said control unit (5) comprises means for causing said number to be updated after a treatment.

## Patentansprüche

1. Ein Verfahren zum Betrieb eines Flusssensors (1), wobei der Flusssensor (1) einen digitalen Speicher (44) umfasst, wobei der Flusssensor (1) wiederholt thermischen und/oder chemischen Behandlungen zur Sterilisation und/oder Reinigung unterzogen wird, **dadurch gekennzeichnet, dass** eine Zahl, die eine Anzahl von Behandlungen die auf dem Flusssensor (1) angewendet wurden, bezeichnet, auf nicht-volatile Art im Speicher (44) gespeichert ist und dass die Zahl nach jeder Behandlung des Flusssensors (1) aktualisiert wird.

2. Das Verfahren nach Anspruch 1, wobei der Flusssensor (1) ein Halbleitersubstrat (1a) umfasst und der Speicher (44) im Flusssensor (1) integriert ist.

3. Das Verfahren nach einem der Ansprüche 1 oder 2, wobei der Flusssensor (1) eine Heizung (2) und mindestens einen Temperatursensor (3) umfasst, und insbesondere wobei die Heizung (2) und der mindestens eine Temperatursensor (3) auf einem Halbleitersubstrat (1a) des Flusssensors (1) integriert sind.

4. Das Verfahren nach einem der vorangehenden Ansprüche, wobei der Flusssensor (1) mit einer Steuerungseinheit (5) verbunden ist, um einen Fluss zu messen, und für die Behandlung der Flusssensor (1) von der Steuerungseinheit (5) abgekoppelt und ohne die Steuerungseinheit (5) thermisch behandelt wird.

5. Das Verfahren nach Anspruch 4, wobei die Steuerungseinheit (5) bewirkt, dass die Zahl nach einer Behandlung aktualisiert wird.

6. Das Verfahren nach einem der Ansprüche 4 oder 5, wobei eine einzigartige Seriennummer des Flusssensors (1) im Speicher (44) gespeichert wird und wobei die Steuerungseinheit (5) eine Sensortestprozedur initiiert und/oder bewirkt, dass die Zahl aktualisiert wird, wenn sie detektiert dass sich die Seriennummer eines angeschlossenen Flusssensors (1) geändert hat.

7. Das Verfahren nach einem der Ansprüche 4 bis 6, wobei der Speicher (44) eine Mitteilung, die in einem Mitteilungsspeicher im Speicher (44) gespeichert ist, umfasst, und wobei die Mitteilung von der Steuerungseinheit (5) gelesen wird, und wobei eine Nachricht in Abhängigkeit von der Mitteilung von der Steuerungseinheit (5) generiert wird, und insbesondere wobei die Nachricht die Notwendigkeit der Durchführung einer Softwareaktualisierung für die Steuerungseinheit (5) bezeichnet.

8. Das Verfahren nach einem der Ansprüche 4 bis 7, wobei der Speicher (44) eine Mitteilung umfasst, die im Mitteilungsspeicher gespeichert ist, und wobei die Mitteilung eine Nachricht umfasst, die von der Steuerungseinheit (5) angezeigt wird.

9. Das Verfahren nach einem der Ansprüche 4 bis 8, wobei die Zahl vom Speicher (44) von der Steuerungseinheit (5) gelesen, in der Steuerungseinheit (5) aktualisiert und von der Steuerungseinheit (5) in den Speicher (44) zurückgeschrieben wird, um die Zahl zu aktualisieren.

10. Das Verfahren nach einem der vorangehenden Ansprüche, wobei der Flusssensor (1) wiederholt Sensortestprozeduren unterzogen wird, wobei in jeder Sensortestprozedur Betriebsparameter des Flusssensors (1) gemessen werden, und insbesondere wobei die Betriebsparameter im Speicher (44) gespeichert werden.

11. Das Verfahren nach Anspruch 10, wobei ein Protokoll der Betriebsparameter, die während mehreren Sensortestprozeduren gemessen wurden, im Speicher (44) gespeichert wird.

12. Das Verfahren nach einem der vorangehenden Ansprüche, wobei während der Behandlung der Flusssensor (1) einer Temperatur von über 100 °C ausgesetzt wird.

13. Das Verfahren nach einem der vorangehenden Ansprüche, wobei der Speicher (44) ein Ablaufdatum des Flusssensors (1) umfasst.

14. Das Verfahren nach einem der Ansprüche 4 bis 9 und Anspruch 13, umfassend die Schritte:
Auslesen des Ablaufdatums von der Steuerungseinheit (5),
Vergleichen des Ablaufdatums mit einem aktuellen Datum mittels der Steuerungseinheit (5) und
Ausgeben einer Warnung und/oder Abweisen des Flusssensors (1) wenn das aktuelle Datum nach dem Ablaufdatum ist.

15. Das Verfahren nach einem der vorangehenden Ansprüche, wobei der Flusssensor (1) wiederholt Sensortestprozeduren unterzogen wird, wobei während der Sensortestprozeduren der Flusssensor (1) hinsichtlich Integrität getestet wird.

16. Das Verfahren nach einem der vorangehenden Ansprüche, weiter umfassend den Schritt der Speicherung eines Zeitstempels im Speicher (44) während der Aktualisierung der Zahl.

17. Eine Vorrichtung zur Messung von Flüssen, umfassend eine Steuerungseinheit (5) und einen Flusssensor (1), wobei der Flusssensor (1) lösbar mit der Steuerungseinheit (5) verbindbar ist, **dadurch gekennzeichnet, dass** der Flusssensor (1) einen nichtvolatilen Speicher (44) zum Empfang einer Zahl umfasst, die eine Anzahl von thermischen und/oder chemischen Behandlungen, denen der Flusssensors (1) unterzogen wurde, bezeichnet, und wobei die Steuerungseinheit (5) Mittel zur Bewirkung einer Aktualisierung nach einer Behandlung umfasst.

## Revendications

1. Un procédé pour opérer un capteur de débit (1), ledit capteur de débit (1) comprenant une mémoire digitale (44), ledit capteur de débit (1) étant répétitivement soumis à un traitement thermique et/ou chimique pour stérilisation et/ou nettoyage, **caractérisé en ce qu'**un numéro indicatif d'une compte de traitements, auxquels ledit capteur de débit (1) a été soumis, est stocké de manière non-volatile dans ladite mémoire (44) et ledit numéro est actualisé après chaque traitement dudit capteur de débit (1).

2. Le procédé selon la revendication 1, ledit capteur de débit (1) comprenant un substrat semi-conducteur (1a) et ladite mémoire (44) étant intégrée dans ledit capteur de débit (1).

3. Le procédé selon l'une des revendications 1 ou 2, ledit capteur de débit (1) comprenant un chauffage (2) et au moins un capteur de température (3), et particulièrement ledit chauffage (2) et ledit au moins un capteur de température (3) étant intégrés sur un substrat semi-conducteur (1a) dudit capteur de débit (1).

4. Le procédé selon l'une des revendications précédentes, ledit capteur de débit (1) étant connecté à une unité de commande (5) pour mesurer un débit et ledit capteur de débit (1) étant déconnecté de ladite unité de commande (5) et traité thermiquement sans ladite unité de commande (5) pour ledit traitement.

5. Le procédé selon la revendication 4, ladite unité de commande (5) faisant que ledit numéro est actualisé après un traitement.

6. Le procédé selon l'une des revendications 4 ou 5, un numéro de série unique dudit capteur de débit (1) étant stocké dans ladite mémoire (44) et l'unité de commande (5) commençant une procédure de test du capteur et/ou faisant que le numéro soit actualisé dès que ladite unité de commande (5) détecte que le numéro de série d'un capteur de débit (1) attaché change.

7. Le procédé selon l'une des revendications 4 à 6, ladite mémoire (44) comprenant une notification stockée dans un stockage de notification dans ladite mémoire (44), et ladite notification étant lue par ladite unité de commande (5) et un message étant lancé par ladite unité de commande (5) en fonction de ladite notification, et particulièrement ledit message étant indicatif d'un besoin d'effectuer une actualisation de software pour ladite unité de commande (5).

8. Le procédé selon l'une des revendications 4 à 7, ladite mémoire (44) comprenant une notification stockée dans ledit stockage de notifications, et ladite notification comprenant un message montré par ladite unité de commande (5).

9. Le procédé selon l'une des revendications 4 à 8, ledit numéro étant lu de ladite mémoire (44) par ladite unité de commande (5), actualisé dans ladite unité de commande (5) et restocké par ladite unité de commande (5) dans ladite mémoire (44), afin d'actualiser ledit numéro.

10. Le procédé selon l'une des revendications précédentes, ledit capteur de débit (1) étant répétitivement soumis à des procédures de test de capteur, dans chaque procédure de test de capteur des paramètres d'opération dudit capteur de débit (1) étant mesurés, et, particulièrement, lesdits paramètres d'opération étant stockés dans ladite mémoire (44).

11. Le procédé selon la revendication 10, un protocole de paramètres d'opération mesurés pendant plusieurs procédures de test de capteur étant stocké dans ladite mémoire (44).

12. Le procédé selon l'une des revendications précédentes, ledit capteur de débit (1) étant soumis à une température supérieure à 100 °C pendant ledit traitement.

13. Le procédé selon l'une des revendications précédentes, ladite mémoire (44) comprenant une date d'expiration dudit capteur de débit (1).

14. Le procédé selon l'une des revendications 4 à 9 et la revendication 13, comprenant les étapes
de lire ladite date d'expiration par ladite unité de commande (5),
de comparer ladite date d'expiration avec une date courante par ladite unité de commande (5) et
de lancer une alerte et/ou de rejeter le capteur de débit (1) si la date courante est après la date d'expiration.

15. Le procédé selon l'une des revendications précédentes, ledit capteur de débit (1) étant répétitivement soumis à des procédures de test de capteur, pendant lesdites procédures de test de capteur ledit capteur de débit (1) étant testé par rapport à l'intégrité.

16. Le procédé selon l'une des revendications précédentes, en outre comprenant l'étape de stocker un horodatage dans ladite mémoire (44) quand le numéro est actualisé.

17. Un dispositif pour mesurer des débits comprenant une unité de commande (5) et un capteur de débit (1), ledit capteur de débit (1) étant connectable de manière détachable à ladite unité de commande (5), **caractérisé en ce que** ledit capteur de débit (1) comprend une mémoire non-volatile (44) pour recevoir un numéro indicatif d'une compte des traitements thermiques et/ou chimiques auxquels le capteur de débit (1) a été soumis et ladite unité de commande (5) comprenant des moyens pour causer ledit numéro d'être actualisé après un traitement.
